# EUROPEAN PATENT APPLICATION

(11) **EP 4 763 950 A1**
(43) Date of publication of application: **24.06.2026**
(21) Application number: 24315586.8
(22) Date of filing: 17.12.2024
(51) Int. Cl.: C10G 1/06, B01D 11/04, C10G 1/08, C10G 21/06, C10G 21/14, B01D 11/00

(54) **PROCESS FOR TREATING A LIQUID CARBONACEOUS FEEDSTOCK FROM A HYDROTHERMAL LIQUEFACTION TREATMENT WITH BACKWASHING OF THE AQUEOUS EFFLUENT**

(71) Applicant: IFP Energies nouvelles, 92500 Rueil-Malmaison (FR); Silva Green Fuel DA, 0216 Oslo (NO)
(72) Inventor: Augier, Frederic, 92852 RUEIL-MALMAISON CEDEX (FR); Ouzineb, Keltoum, 92852 RUEIL-MALMAISON CEDEX (FR); Ahmed, Rizwan, 1344 HASLUM (NO); Kleverud, Jan Henning, 0852 OSLO (NO)
(74) Representative: IFP Energies nouvelles

(57) **Abstract**

The invention relates to a process for treating a biocrude feedstock obtained from a hydrothermal liquefaction treatment to reduce the content of inorganic compounds, comprising:
- a step of diluting the biocrude feedstock with a light organic diluent to obtain a diluted biocrude feedstock;
- a step of washing the diluted biocrude feedstock with at least one aqueous solvent, followed by a step of backwashing with a counter-solvent comprising at least one hydrocarbon cut at a specific boiling point, in one or more countercurrent liquid-liquid extraction columns;
- a raffinate fractionation step to obtain at least the biocrude feedstock depleted in inorganic compounds and a phase comprising the diluent.

## Description

### Technical field

The present invention relates to the production of potentially valuable chemicals or biofuels from biomass, especially lignocellulosic biomass. More specifically, the invention is concerned with processes for hydrothermal liquefaction of biomass, also known by the abbreviation HTL, which enable transformation of the biomass into a carbonaceous feedstock dubbed "biocrude". This so-called "biocrude" feedstock needs to be purified before being supplied to hydrotreatment/hydroconversion processes to obtain the chemicals at the desired specifications.

### Prior art

Hydrothermal liquefaction (for more details, refer to the publication "Continuous hydrothermal liquefaction of biomass: A critical review", D. Castello, T. H. Pederson, L. A. Rosendahl, Energies 2018, 11, 3165) is a process for converting a feedstock in the presence of water at a pressure of between 100 bar and 350 bar (between 10⁷ Pa and 3.5x 10⁷ Pa) and at a temperature of between 250°C and 450°C. Catalysts can be used for the hydrothermal liquefaction, such as pH modifiers, NaOH, KOH, K₂CO₃, Na₂CO₃, etc.

The products of the hydrothermal liquefaction are called "biocrude", consisting mainly of organic molecules, an aqueous phase comprising water-soluble organic compounds (alcohols, acids, ketones, phenols, etc.), salts, especially metallic salts, gas and optionally biochar: Biochar is a solid product rich in carbon, "char" deriving from the word "charcoal". The gas produced consists mainly of CO₂ but may also contain hydrogen, methane and CO.

In the hydrothermal liquefaction process, the water can be present in liquid form or in a relatively dense supercritical state. Water close to the critical point has very different properties from water at room temperature. These properties close to the critical point allow water to play several roles in the conversion process, such as being a reactant, a catalyst or a hydrogen source. At close to the critical point or in the supercritical state, water has properties that facilitate liquefaction, such as a low dielectric constant that allows solubilization of apolar molecules and an ionic product high enough to promote ionic reactions leading to liquid products over radical reactions leading to solid or gaseous products.

The reactions taking place in the hydrothermal liquefaction process are numerous and complex, but there are depolymerization reactions including hydrolysis, dehydration, decarboxylation, and repolymerization reactions including condensation.

The yields and the composition of the biocrude depend on the operating conditions, but also on the feedstock treated by hydrothermal liquefaction. For example, for a feedstock consisting of wood, a mass yield of biocrude of the order of 40-45% and of gas of likewise 40-45% is obtained in hydrothermal liquefaction.

The hydrothermal liquefaction feedstock may be biomass, preferably selected from trees, woodchips, plants, grasses, seeds, fibres, seed husks, aquatic plants, algae, hay and other sources of lignocellulosic materials, such as, for example, those originating from organic waste, municipal waste, agri-food waste, animal waste, forestry waste, sawmill waste, slaughter residues, agricultural and industrial waste (such as, for example, sugarcane bagasses, waste from oil palm cultivation, sawdust or straw). The hydrothermal liquefaction feedstock may also come from paper pulp and from by-products of recycled or non-recycled paper, or from by-products from paper mills, waste from used plastics or used tyres. The feedstock may also be a mixture of at least two of these materials.

The biocrude obtained by hydrothermal liquefaction is a complex mixture of compounds, mainly consisting of hydrocarbons and oxygen-containing compounds. In general, the oxygen-containing compounds are organic acids, ketones, oxygen-containing aromatic compounds, alcohols, aldehydes, esters, ethers and water. Water generally accounts for less than 15% by weight of the biocrude. In the case of a lignocellulosic biomass feedstock, the biocrude contains compounds derived from cellulose, hemicellulose and lignin (structure present in lignocellulosic biomass).

The biocrude obtained by hydrothermal liquefaction has an oxygen, sulfur and nitrogen content that varies greatly depending on the hydrothermal liquefaction feedstock (algae, wood, etc.). For example, the biocrude resulting from hydrothermal liquefaction of wood generally consists of 5% to 20% by weight of oxygen, less than 0.5% by weight of sulfur and less than 5% by weight of nitrogen in the dry biocrude (without water).

Biocrude can contain up to 4% by weight of inorganic compounds, primarily metals such as sodium, potassium but also calcium, iron, etc. These inorganic compounds may originate from catalysts used for the hydrothermal liquefaction, from the hydrothermal liquefaction feedstock itself, and from metals optionally used to grind the hydrothermal liquefaction feedstock. Sodium and potassium can be present in relatively large amounts in the biocrude, as the hydrothermal liquefaction process generally uses alkali metal-based catalysts (NaOH, KOH, K₂CO₃, Na₂CO₃, etc.) in significant quantity.

This content of inorganics, especially metals, generally does not allow the biocrude to be used as a fuel, because the amount of ash is too high.

To be converted into biofuels (petrol, kerosene, diesel, marine fuel) or chemicals, the biocrude must be treated, especially so as to reduce the heteroatoms and more particularly the oxygen it contains. This treatment may comprise at least one operation selected from hydroconversion, hydrotreatment, hydrocracking or else catalytic cracking. These operations, though, use catalysts known to those skilled in the art as being sensitive to the content of metals (especially metals of the alkali metal or alkaline-earth metal type such as Na, K, Ca, etc.). These metals, indeed, poison the catalysts: they at least partially deactivate them.

It is therefore necessary to purify the biocrude, i.e. to reduce its content of inorganic, especially metallic, compounds, so that subsequent treatments of the biocrude can be carried out successfully.

Patents US 11,111,445, US 10,533,138 and US 11,976,243 disclose treatments aimed at purifying biocrudes, and in particular at recovering the metal salts they contain, in order to recycle them, with different types of separation devices, using acidic aqueous phases or else washing agents, but the realization and implementation of these separation/treatment operations appear complex.

An alternative route for the purification of biocrudes is washing, by liquid-liquid extraction with a countercurrent aqueous "solvent" phase (cf. Haider MS, Isik MA, Castello D, Pedersen TH, Rosendahl LA. Demineralization of Miscanthus Biocrude Obtained from Catalytic Hydrothermal Liquefaction: Conditioning through Acid Washing. Process 2021;9:1035. https://doi.org/ 10.3390/pr9061035). To facilitate the separation of the phases downstream of the extraction, it is useful to dilute the biocrude feedstock in a light organic "diluent" fluid (methyl ketone or MEK as it is called or another light solvent miscible with the biocrude); this has the effect of reducing both the viscosity and the density of the organic phase (cf. patent application EP 23315465.7).

The water loaded with salts leaves at the bottom of the extraction column ("extract" phase), and the demineralized biocrude leaves at the top, diluted in the diluent ("raffinate" phase). In these washing processes, the extract is saturated with diluent. The concentration of diluent dissolved in the extract is variable depending on the diluent used: about 15% if the diluent is MEK, about 2% if it is methyl isobutyl ketone (MIBK as it is called).

For economic and environmental reasons, the diluent dissolved in the extract and in the raffinate must be recovered and recycled. Conventionally, a person skilled in the art recovers the diluent by *separation,* evaporation or distillation of the extract (cf. patent application EP 23315465.7). However, depending on the solvent used and the amount dissolved, these processes can be very energy-intensive.

### Subject of the invention

The applicant has developed a treatment that is simple to implement and economical in the consumption of utilities and equipment to reduce the content of inorganic compounds, especially metallic compounds, in a biocrude-type feedstock. The invention first uses a dilution with a "light" organic diluent (less dense and less viscous than the biocrude), then a countercurrent liquid/liquid extraction with an aqueous solvent and a step of recovering the diluent dissolved in the extract by liquid/liquid extraction using an organic fluid called a counter-solvent. For this, the counter-solvent must have well-defined properties. It must advantageously be very sparingly soluble in water (solubility < 0.8% by weight in water), have good affinity with the diluent and have a density of less than 950 kg/m³ and a viscosity of less than 6 cP at 40°C. The applicant has discovered that a hydrocarbon cut whose initial boiling point is between 100°C and 230°C and whose final boiling point is between 230°C and 300°C constitutes a very good counter-solvent.

This cut can advantageously be obtained from the distillation of the demineralized biocrude (raffinate obtained during the first washing) or a light cut obtained from HTL.

The invention therefore has multiple advantages. Indeed, the process according to the invention allows:
- a reduction in the energy cost associated with the recovery of the diluent dissolved in the extract, by substituting the extract distillation operation with a backwashing operation with a demineralized biocrude cut from the HTL step or from a distillation. The increase in the cost of distilling the raffinate to ensure the recovery of the diluent in the extract varies according to the nature of the diluent and may be higher in the case of a diluent of low solubility in water;
- the use of a single extraction column to carry out the demineralization step in the upper part and in the lower part the step of recovering the diluent from the extract from the upper part, which saves the purchase of a distillation column to treat the extract;
- the use of more apolar diluents whose recovery in the extract by distillation would be impossible owing to excessive energy consumption. This type of diluent may make it possible to reduce the loss of oxygen-containing compounds from the biocrude in the extract and to improve the quality of the aqueous effluent leaving the process;
- an improvement in the quality of the aqueous effluent leaving the process after the extract backwashing operation, allowing recovery not only of the diluent but also of the oxygen-containing compounds from the biocrude that are dissolved in the extract. Thus, the invention succeeds in significantly reducing the content of inorganic compounds in a biocrude-type feedstock, the reduction being sufficient to allow the subsequent treatment steps for such a feedstock to be carried out without having to modify the conventional operation thereof, in particular by retaining the type of catalyst usually used for these hydroconversion, hydrotreatment, hydrocracking or else catalytic cracking steps.

The present invention provides a process for treating a liquid feedstock which comprises products which are at least partly carbonaceous and which is obtained from a hydrothermal liquefaction treatment "HTL", called biocrude feedstock, to reduce the content therein of inorganic compounds, especially metallic compounds, characterized in that said treatment comprises:
- a step a) of diluting the biocrude feedstock with a diluent so as to obtain a diluted biocrude feedstock, said diluent comprising an organic liquid phase with a viscosity and a density lower than that of the biocrude feedstock;
- a step b) of washing the diluted biocrude feedstock obtained in step a) with at least one solvent which comprises a liquid aqueous phase, by countercurrent liquid-liquid extraction, so as to obtain first a raffinate comprising the biocrude feedstock depleted in inorganic compounds and diluent, and secondly a first extract comprising the solvent enriched in inorganic compounds and diluent;
- a step c) of backwashing said first extract comprising the solvent enriched in inorganic compounds and diluent with a counter-solvent, by countercurrent liquid-liquid extraction, so as to obtain first the diluent-enriched counter-solvent and secondly a second extract depleted in diluent and enriched in inorganic compounds, said counter-solvent comprising at least one hydrocarbon cut whose initial boiling point is between 100°C and 230°C and whose final boiling point is between 230°C and 300°C;
- a step d) of fractionating by distillation of the raffinate obtained in step b) to obtain at least the biocrude feedstock depleted in inorganic compounds and an effluent comprising the diluent, characterized in that at least part of the effluent comprising the diluent is reintroduced into the feedstock dilution step a).

Advantageously, said counter-solvent used in the backwashing step c) is a light cut obtained from said hydrothermal liquefaction treatment.

Advantageously, said counter-solvent used in the backwashing step c) is an intermediate cut obtained at the end of the fractionation step d).

Preferably, said counter-solvent used in the backwashing step c) comprises at least one hydrocarbon cut whose initial boiling point is between 150°C and 210°C and whose final boiling point is between 230°C and 280°C.

Advantageously, said counter-solvent used in the backwashing step c) has a solubility in water of less than 0.8% by weight, a dynamic viscosity at 40°C of not more than 6 cP, and a density at 15°C of not more than 950 kg/m³.

Advantageously, the washing step b) and the backwashing step c) are carried out in two separate liquid/liquid extraction columns.

Preferably, the washing step b) and the backwashing step c) are carried out within the same liquid/liquid extraction column.

Advantageously, at least a portion of said diluent-enriched counter-solvent is reintroduced into the washing step b).

Advantageously, a portion of said diluent-enriched counter-solvent is mixed with the raffinate and then sent to the fractionation step d).

Advantageously, the diluent supplied in step a) has a final boiling point of not more than 150°C.

Advantageously, at the end of the dilution step a), the diluted biocrude feedstock has a dynamic viscosity at 20°C of not more than 7 cP, and a density at 15°C of not more than 950 kg/m³.

Advantageously, the diluent used in the dilution step a) is chosen from a light cut present in the biocrude feedstock or a chemical compound or mixture of chemical compounds, in particular from the class of alcohols, ethers, ketones and hydrocarbons.

Advantageously, the solvent used in the washing step b) is chosen from at least one of the following solutions: a pure aqueous solution, a demineralized aqueous solution, an aqueous solution containing soluble organic compounds, and an acidic aqueous solution.

Advantageously, during the dilution step a), the ratio R of the flow rate Qd of the diluent to the flow rate Qb of the biocrude feedstock is not more than 10.

Advantageously, the backwashing step c) is operated at a temperature of between 15°C and 100°C and below the boiling point of the diluent at the washing pressure, and the washing pressure is between 0.5×10⁵ Pa and 5×10⁵ Pa.

### List of the Figures

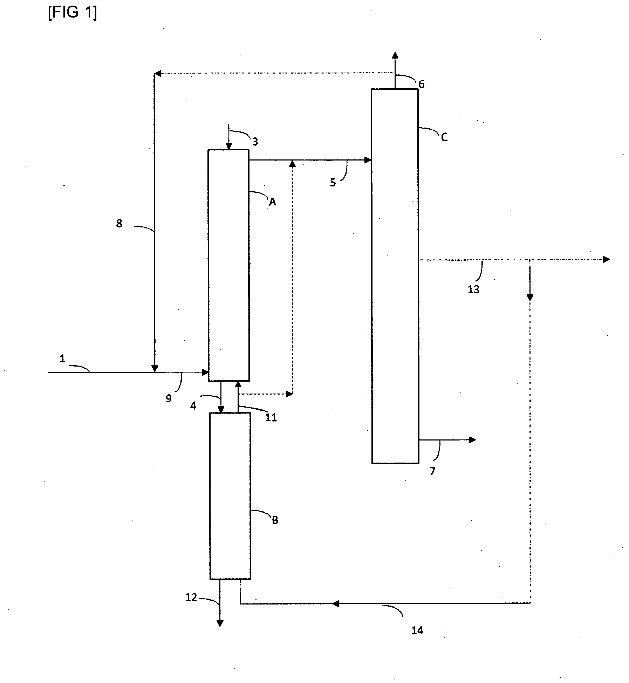

Figure 1: this figure represents very schematically a plant implementing the biocrude treatment process according to a first embodiment of the invention. In this embodiment, the washing step b) and backwashing step c) take place in two separate liquid/liquid extraction columns A and B.

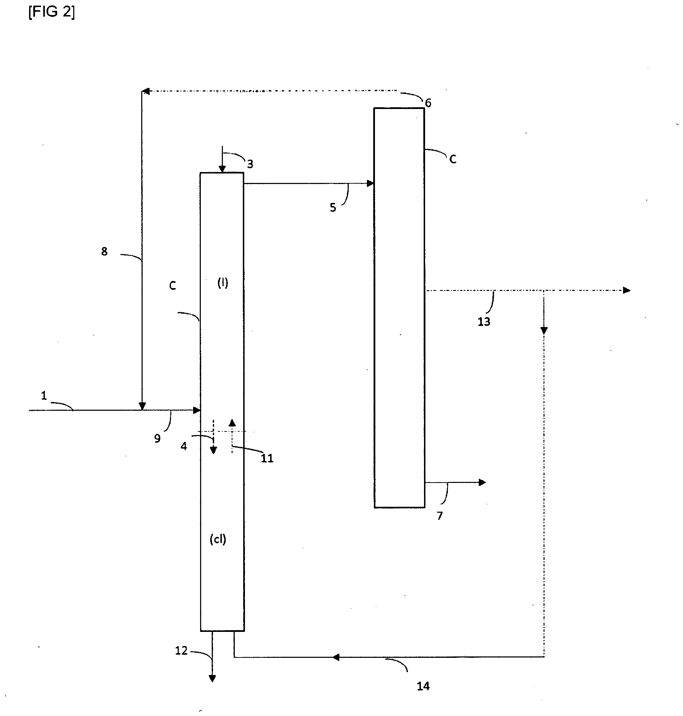

Figure 2: this figure represents very schematically a plant implementing the biocrude treatment process according to a second embodiment of the invention. In this embodiment, the washing step b) and backwashing step c) take place in the same liquid/liquid column C, in washing (I) and backwashing (cl) zones of the column C.

These figures do not represent all the equipment in the plant, but that which is most useful to the understanding of the invention. The various devices and others are not necessarily to scale, nor necessarily represented in space as they may be in an industrial situation.

### Detailed description of the invention

The invention provides a process for treating a liquid feedstock which comprises products which are at least partly carbonaceous and which is obtained from a hydrothermal liquefaction treatment "HTL", called biocrude feedstock (1), to reduce the content therein of inorganic compounds, especially metallic compounds, characterized in that said treatment comprises:
- a step a) of diluting the biocrude feedstock with a diluent (8) so as to obtain a diluted biocrude feedstock (9), said diluent (8) comprising an organic liquid phase with a viscosity and a density lower than that of the biocrude feedstock;
- a step b) of washing the diluted biocrude feedstock (9) obtained in step a) with at least one solvent (3) which comprises a liquid aqueous phase, by countercurrent liquid-liquid extraction, so as to obtain first a raffinate (5) comprising the biocrude feedstock depleted in inorganic compounds and diluent, and secondly a first extract (4) comprising the solvent enriched in inorganic compounds and diluent;
- a step c) of backwashing said first extract (4) comprising the solvent enriched in inorganic compounds and diluent with a counter-solvent (14), by countercurrent liquid-liquid extraction, so as to obtain first the diluent-enriched counter-solvent (11) and secondly a second extract (12) depleted in diluent and enriched in inorganic compounds, said counter-solvent (14) comprising at least one hydrocarbon cut whose initial boiling point is between 100°C and 230°C and whose final boiling point is between 230°C and 300°C;
- a step d) of fractionating by distillation of the raffinate (5) obtained in step b) to obtain at least the biocrude feedstock depleted in inorganic compounds (7) and an effluent (6) comprising the diluent, characterized in that at least part of the effluent (6) comprising the diluent is reintroduced into the feedstock dilution step a).

### Feedstock

An aim of the invention is to treat biocrude-type feedstocks in order to reduce their content of inorganic compounds, especially metallic compounds.

The biocrude obtained by hydrothermal liquefaction is a complex mixture of compounds consisting mainly of hydrocarbons and oxygen-containing compounds (cf. "Continuous hydrothermal liquefaction of biomass: a critical review", D. Castello, T. H. Pederson, L. A. Rosendahl, Energies 2018, 11, 3165). In general, the oxygen-containing compounds are organic acids, ketones, oxygen-containing aromatic compounds, alcohols, aldehydes, esters, ethers and water. Water generally accounts for less than 15% by weight of the biocrude.

In the case of a lignocellulosic biomass feedstock, the biocrude contains compounds derived from cellulose, hemicellulose and lignin (structure present in lignocellulosic biomass).

The biocrude obtained by hydrothermal liquefaction has an oxygen, sulfur and nitrogen content that varies greatly depending on the hydrothermal liquefaction feedstock (algae, wood, etc.). For example, the biocrude resulting from hydrothermal liquefaction of wood generally consists of 5% to 20% by weight of oxygen, less than 0.5% by weight of sulfur and less than 5% by weight of nitrogen in the dry biocrude (without water).

Biocrude can contain up to 4% by weight of inorganics, mainly metals such as sodium, potassium but also calcium, iron, etc. The inorganics may originate from catalysts used for the hydrothermal liquefaction, from the hydrothermal liquefaction feedstock, and from metals used to grind the hydrothermal liquefaction feedstock. Sodium and potassium can be present in large amounts in the biocrude, as the hydrothermal liquefaction process uses alkali metal-based catalysts (NaOH, KOH, K₂CO₃, Na₂CO₃ etc.) in large quantity.

Biocrude is generally characterized by a kinematic viscosity at 50°C of between 10 and 40 000 cSt, a dynamic viscosity at 50°C of between 10 and 40 000 cP, a density at 15°C of between 0.9 and 1.2 and a final distillation temperature exceeding 750°C.

The biocrude has a very wide distillation range, extending from room temperature to more than 750°C. For example, for a biocrude obtained from hydrothermal liquefaction of wood, about 10% by weight of the biocrude is vaporized in the range 20°C-180°C, 10% by weight to 45% by weight of the biocrude is vaporized in the range 180°C-350°C and 45% by weight to 80% by weight of the biocrude is vaporized beyond 350°C.

The steps of the process according to the invention are detailed below. The reference signs are those shown in Figures 1 and 2.

### Step a): step of diluting the biocrude feedstock with a diluent (8)

The biocrude feedstock (1) is diluted with a diluent (8) to obtain a diluted biocrude feedstock (9). The diluent (8) comprises an organic liquid phase with a viscosity and a density lower than that of the biocrude feedstock. At least a portion of the diluent (8) is obtained from recycling a portion of the effluent (6) comprising the diluent obtained after the step d) of fractionating the raffinate (5).

During the dilution step a), the diluent advantageously has a final boiling point of not more than 150°C, preferably not more than 100°C.

Preferably, the diluent used in the dilution step a) is chosen from a light cut present in the biocrude feedstock or a chemical compound or mixture of chemical compounds, in particular from the class of alcohols, ethers, ketones and hydrocarbons. Without being exhaustive, the chemical compound or mixture of chemical compounds, in particular from the class of alcohols, ethers, ketones and hydrocarbons, may be chosen from 2-butanone (MEK), 4-methylpentan-2-one (MIBK), toluene, tetrahydrofuran, ethyl acetate, acetone, formic acid, butanol, isopropanol, propanol, ethanol, acetic acid, dioxane, butenol, diethyl ether, methyl acetate and ethyl acetate.

The process can be started with a diluent whose boiling point is close to that of the effluent (6) comprising the diluent of which a portion is recycled according to step d), which is a light fraction of the biocrude; this phase will then gradually accumulate in the recycling loop over time and will thus gradually replace the initial diluent.

Preferably, at the end of the dilution step a), the diluted biocrude feedstock (9) has a dynamic viscosity at 20°C of not more than 7 cP, preferentially not more than 4 cP, and a density at 15°C of not more than 950 kg/m³, preferably not more than 900 kg/m³. These properties are obtained by selecting a suitable type of diluent (8) and a suitable diluent flow rate (relative to the biocrude flow rate).

Preferably, during the dilution step a), the ratio R of the flow rate Qd of the diluent to the flow rate Qb of the biocrude feedstock is not more than 10, and preferably at least 0.1, the ratio R preferably being between 0.5 and 3.

### Step b): step of washing the diluted biocrude feedstock

The diluted biocrude feedstock (9) obtained in step a) is then washed by countercurrent liquid-liquid extraction with at least one solvent (3) which comprises a liquid aqueous phase, so as to obtain first a raffinate (5) comprising the biocrude feedstock depleted in inorganic compounds and diluent, and secondly a first extract (4) comprising the solvent enriched in inorganic compounds and diluent.

The raffinate (5) consists mainly of the biocrude, diluent and compounds present in the solvent (mainly water). The amount of inorganic/mineral compounds present in the raffinate (5) is much lower than in the diluted biocrude (9), owing to the efficiency of the liquid-liquid extraction.

The first extract (4) consists mainly of solvent, diluent, extracted inorganics, and polar compounds from the biocrude which are soluble in the aqueous solvent.

In a first embodiment, the washing step is carried out in a dedicated liquid/liquid extraction column referred to as washing column A, as can be seen in Figure 1.

In a second embodiment, the washing step is carried out in the same liquid/liquid extraction column C as the backwashing step c), as can be seen in Figure 2, but in a dedicated zone referred to as the washing zone (I) of the column C.

Operating an extraction in such a column requires a sufficient difference in density between the phases present (often greater than 50 kg/m³), and the greater the difference in density, the easier this implementation will be. Moreover, the viscosity of one or both phases plays an important role in this operation, because the more it increases, the more the transfer of material between phases will be slowed down, and the more the capacity of the column is likely to decrease, in terms of possible feedstock flow per column section unit.

Countercurrent columns are useful because they allow the desired solutes to be extracted much better than in a cocurrent column or in a stirred tank. Indeed, the number of theoretical stages can reach high values (between 2 and 15 in the vast majority of cases), and with minimized solvent consumption.

The countercurrent liquid/liquid extraction can be implemented quite simply, by an extraction column of gravity extraction type for example (or two or more in series or in parallel). It can be a single column or a plurality, mounted in series or in parallel. The column (or columns) may be equipped at the top and/or bottom of the column with decanting devices.

In the column, two phases are mixed and brought into contact: an organic phase (the diluted biocrude (9)) and an aqueous phase (the solvent (3)). In the column, one phase is dispersed in the other, which is the continuous phase.

The organic phase is called the light phase because its density is lower than the other phase, the aqueous phase. The aqueous phase is called the heavy phase.

The dispersed phase may be the heavy phase (solvent 3) or the light phase (the diluted biocrude (9)), but preferably the light phase (the diluted biocrude (9)). If the dispersed phase is the heavy phase (solvent 3), the column is preferably equipped with a decanter at its bottom. The decanter will be at the top of the column if the dispersed phase is the light phase (the diluted biocrude (9)). It is also possible to provide a decanter at the bottom and at the top of the column.

Consequently, advantageously, the washing step b) can be preceded and/or followed by a dedicated or additional decanting step b1) and/or b2) to improve the decanting between the two aqueous and organic phases. The process according to the invention may provide for the device used during the washing step b) to comprise a countercurrent liquid/liquid extraction column equipped at the bottom of the column and/or at the top of the column with a decanting device for implementing steps b1) and/or b2). Advantageously, a raffinate (5) decanting device is placed at the top of the washing column, upstream of the fractionation step d), to ensure the decanting of the residual aqueous phase.

According to one embodiment of the invention, the washing step b) is carried out with a single solvent. This may be an aqueous solution, which can be pure water, demineralized water, water with soluble organic molecules, or even an acidic aqueous solution. In the case of an acidic aqueous solution, it may contain from 10 ppm to 5% by weight of an organic or mineral acid, strong or weak, such as acetic acid, nitric acid, sulfuric acid, hydrochloric acid, citric acid, oxalic acid, lactic acid, formic acid or any other acid.

It may be a mixture of at least two of these solutions.

Advantageously, the solvent may consist wholly or partly of the extract after optional treatment by step e), aimed at reducing its content of inorganic salts, especially metallic salts: this is the recycling of step f) described below.

According to another embodiment of the invention, the washing step b) is carried out with at least two different solvents, especially two solvents. In this case, the step b) of washing the diluted biocrude feedstock (9) obtained in step a) is preferably carried out with at least two distinct solvents which are brought into contact with said feedstock in distinct contacting zones. These may be a first solvent which is an aqueous liquid phase with a neutral pH, in particular of between 6.5 and 7.5, and a second solvent which is an acidic aqueous liquid phase, having a pH of less than 6.5, with countercurrent liquid-liquid extraction, so as to obtain first a raffinate comprising the biocrude feedstock depleted of inorganic compounds and diluent, and secondly an extract (4) comprising the solvents enriched in inorganic compounds and diluent.

In this other embodiment, the first solvent S1 is preferably chosen from pure water, demineralized water and water with soluble organic molecules. Preferably, the second solvent S2 is an acidic aqueous solution, having a pH of less than 6.5.

Advantageously, the second solvent S2 is an acidic aqueous solution containing from 10 ppm, in particular from 100 ppm, to 5% by weight of at least one strong or weak organic or mineral acid, in particular chosen from at least one of the following acids: acetic acid, nitric acid, sulfuric acid, hydrochloric acid, citric acid, oxalic acid, lactic acid, formic acid, and optionally soluble organic molecules.

The solvent, or at least one of the solvents when there are two or more of them, may also be an aqueous solution acidified by injection of carbon dioxide into the aqueous solution (which may already contain one of the abovementioned acids). Indeed, the hydrothermal liquefaction step prior to the treatment according to the invention tends to generate carbon dioxide, which can therefore advantageously be used to acidify the solvent or solvents, where appropriate.

In the washing step b) with two solvents, the ratio R1 of the flow rate of the first solvent Qs1 to the flow rate of the diluted biocrude feedstock Qm is preferably between 0.05 and 5, preferably between 0.1 and 3.

In the washing step b) with two solvents, the ratio R2 of the flow rate of the second solvent Qs2 to the flow rate of the diluted biocrude feedstock Qm is preferably between 0.05 and 5, preferably between 0.1 and 3.

According to one variant, at least one of the first and second solvents comprises at least two distinct inlets arranged at different heights of the washing column (A) if the washing takes place in a dedicated column, as can be seen in Figure 1, or at different heights of the washing zone (I) of extraction column C if the washing and backwashing take place in the same column, as can be seen in Figure 2. Thus, one of the solvents may have two different injection points at different column heights, for example one injection point at the top of the column and (at least) another at an intermediate column height, or two injection points at different intermediate column heights.

For example, at least one of the inlets of the first solvent may be at the top of the column.

It is also possible that it is instead one of the inlets of the second solvent that is at the top of the column.

For example, at least one of the inlets of the second solvent is at an intermediate height of the column, in particular at a height H₂ relative to the total height H of the column such that the ratio H₂/H is between 0.2 and 0.8.

It is also possible that it is instead one of the inlets of the first solvent that is at an intermediate height of the column, in particular at the height H₂ in question.

The total height H is understood to mean the useful height of the column, in a manner known in the field of liquid-liquid extraction or distillation columns.

If the first solvent (or the second solvent) has a second inlet into the column at an intermediate height H₃, then this intermediate height H₃ is preferably lower than the height H₂ of the inlet of the second solvent (or first solvent).

Advantageously, this height H₃ of the second inlet of the first solvent (or of the second solvent) may be such that, H being the total height of the column, the ratio H₃/H is between 0.05 and 0.4.

### Step c): step of backwashing the first extract (4)

The first extract (4) comprising the solvent enriched in inorganic compounds and diluent is contacted with a counter-solvent (14) by countercurrent liquid-liquid extraction to obtain first the diluent-enriched counter-solvent (11) and secondly a second extract (12) depleted in diluent and enriched in inorganic compounds. Said counter-solvent (14) comprises at least one hydrocarbon cut whose initial boiling point is between 100°C and 230°C and whose final boiling point is between 230°C and 300°C.

In one or more embodiments of the invention, at least a portion of said diluent-enriched counter-solvent (11) is reintroduced into the washing step b).

In one or more embodiments of the invention, a portion of said diluent-enriched counter-solvent (11) is directly mixed with the raffinate (5) and then sent to the fractionation step d) described below.

In order to operate this backwash by liquid/liquid extraction, the counter-solvent (14) must have well-defined properties. Advantageously, it must be very sparingly soluble in water (solubility < 0.8% by weight in water), have good affinity with the diluent and have a density of less than 950 kg/m³ and a viscosity of less than 6 cP at 40°C.

Said counter-solvent (14) comprises at least one hydrocarbon cut whose initial boiling point is between 100°C and 230°C, preferably between 150°C and 210°C, and whose final boiling point is between 230°C and 300°C, preferably between 230°C and 280°C.

In one or more embodiments of the invention, the counter-solvent is a light cut obtained from the liquid/liquid/gas separation of the hydrothermal biomass liquefaction process. After the hydrothermal liquefaction of the lignocellulosic biomass, the mixture obtained is composed mainly of three phases: an aqueous phase containing water-soluble compounds, an organic phase called biocrude, and a gaseous phase mainly comprising CO₂. The differences in density between the phases allow separation by decanting. A portion of the aqueous phase can be recycled, which allows the water requirements to be reduced. It is subjected beforehand to a purification step to recover the water enriched in catalysts and then recycled at the inlet of the HTL unit, and an intermediate cut of biocrude dissolved in the water. This purification operation can be carried out by processes known to those skilled in the art, such as evaporation or distillation.

In one or more embodiments of the invention, the counter-solvent is an intermediate distillation cut from the fractionation step d) with an initial boiling point of between 100°C and 230°C and a final boiling point of between 230°C and 300°C.

By virtue of the backwashing step carried out according to the invention, the loss of diluent and light biocrude in the second extract (12) is less than 1% by weight, preferably less than 0.5% by weight.

In a first embodiment of the invention, as can be seen in Figure 1, the washing (step b) and the backwashing (step c) are carried out in separate extraction columns, column A for washing and column B for backwashing.

Advantageously, the liquid/liquid washing extraction column A is operated at a pressure of between 0.5×10⁵ Pa and 5×10⁵ Pa, and at a temperature of between 15°C and 100°C, while remaining below the boiling point of the diluent at the washing pressure.

The washing column A may be of various types: packed column, perforated tray column, mechanically stirred column, pulsed column or another type.

The washing column A makes it possible to reach a number of theoretical stages of between 2 and 15, and preferably between 2.5 and 7.

The ratio T_{A}/S_{A} is between 5 and 80 m/h, preferably between 10 and 40 m/h, where:
S_{A} is the flow cross-section of the washing column expressed in m²;
T_{A} is the total volume traffic in the washing column, T_{A} being defined as follows
T_{A} = Qm/rhoₘ + Qs/rhoₛ, expressed in m³/h;
where rhoₘ and rhoₛ are the respective densities, for example in kg/m³, of the diluted biocrude (9) and of the solvent (3) under the operating conditions of the washing column (pressure, temperature).

The washing extraction column A may be of gravity extraction type, for example (or two or more in series or in parallel). It can be a single column or a plurality, mounted in series or in parallel.

Advantageously, the liquid/liquid backwashing extraction column B is operated at a pressure of between 0.5×10⁵ Pa and 5×10⁵ Pa, and at a temperature of between 15°C and 100°C, while remaining below the boiling point of the diluent at the backwashing pressure. The backwashing column B may be of various types: packed column, perforated tray column, mechanically stirred column, pulsed column or another type. The backwashing column B makes it possible to reach a number of theoretical stages of between 2 and 15, and preferably between 2.5 and 7. The ratio T_{B}/S_{B} is between 5 and 80 m/h, preferably between 10 and 40 m/h, where:
S_{B} is the flow cross-section of the backwashing column B expressed in m²;
T_{B} is the total volume traffic in the backwashing column B, T_{B} being defined as follows
T_{B} = Qm/rhoₘ + Qs/rhoₛ, expressed in m³/h;
where rhoₘ and rhoₛ are the respective densities, for example in kg/m³, of the extract (4) and of the counter-solvent (14) under the operating conditions of the backwashing column (pressure, temperature).

The backwashing extraction column B may be of gravity extraction type, for example (or two or more in series or in parallel). It can be a single column or a plurality, mounted in series or in parallel.

In a second embodiment of the invention, as can be seen in Figure 2, the washing of step b) and the backwashing of step c) are carried out in a single liquid/liquid extraction column C. The column C then consists of a washing zone (zone (I)) located at the top of column C and a backwashing zone (zone (cl)) at the bottom of column C.

In this case, the flows of diluent-enriched counter-solvent (11) on the one hand and extract (4) on the other hand are inlets/outlets of the washing (I) and backwashing (cl) zones.

In this case, the diluted biocrude feedstock (9) obtained in step a) enters the extraction column C from the bottom of the washing zone (I) and the solvent (3) enters the extraction column C from the top of the washing zone (I), so as to create a countercurrent in the washing zone (I). The extract (4) exits the washing zone (I) into the backwashing zone (cl) and creates a countercurrent in the backwashing zone with the counter-solvent (14) which enters the extraction column C via the bottom of the backwashing zone (cl). The extract (12) depleted in diluent and enriched in inorganic compounds leaves the extraction column C via the bottom of the backwashing zone (cl).

The column C is operated at a pressure of between 0.5×10⁵ Pa and 5×10⁵ Pa and at a temperature of between 15°C and 100°C, while remaining below the boiling point of the diluent at the contacting pressure. The column C may be of various types: packed column, perforated tray column, mechanically stirred column, pulsed column or another type. The number of theoretical stages of the washing zone (I) is between 2 and 15, and preferably between 2.5 and 7. The number of theoretical stages of the backwashing zone (cl) is between 2 and 15, and preferably between 2.5 and 7.

### Step d): fractionation of the raffinate (5)

The raffinate (5) obtained in step b) is then fractionated by distillation so as to obtain at least the biocrude feedstock depleted in inorganic compounds (7) and an effluent (6) comprising at least partly the diluent. The biocrude feedstock depleted in inorganic compounds (7) has a significantly reduced content of inorganics, in particular of metals, relative to the biocrude feedstock (1).

With the invention, a reduction (by weight) in the content of inorganic compounds, of inorganic salts/metal salts type, in the biocrude is obtained of at least 50% (by weight) and in particular of at least 70% (by weight). It is thus possible to achieve biocrude qualities with contents of not more than 500 ppm, in particular of not more than 400ppm or 300ppm or 200ppm or 100 ppm, of the entirety of these inorganic compounds.

Advantageously, said effluent (6) comprising the diluent can be recycled at least in part as diluent (8) to the dilution step (a). This recycling can be partial or total: it can be supplemented by an addition of external diluent where appropriate, but it is very useful, because it enables a drastic reduction in the consumption of diluent in the treatment process according to the invention.

Preferably, an intermediate hydrocarbon cut (13) whose initial boiling point is between 100°C and 230°C and whose final boiling point is between 230°C and 300°C is also obtained in step d). Preferably, at least a portion of said intermediate hydrocarbon cut (13) obtained in the fractionation step is returned to the backwashing step as counter-solvent (14).

Advantageously, the process of the invention also comprises:
- an optional step e) of treating the second extract (12), depleted in diluent and enriched in inorganic compounds, obtained in step c), to reduce its content of inorganic compounds. The step e) may also allow these inorganic compounds, for example metal salts, to be recovered, with a view to recycling them.
- an optional step f) of recycling at least a portion of the extract with reduced content of inorganic compounds, obtained in step e), as solvent in the washing step b).

Here again, it is therefore possible to recycle this extract at least partially, by purifying it preferably beforehand, to replace all or part of the (aqueous) solvent used in the liquid/liquid extraction, thus also reducing the water consumption of the process of the invention.

### Examples

Simulations in PRO/II Process Engineering 10.2 were carried out to illustrate the invention. The process of treating a biocrude liquid feedstock was simulated. The thermodynamic model used is UNIFAC T Dep-2 (Oldenburg version). The objective of these examples is to compare the energy consumption of different diluent recovery processes according to the nature of the diluent. Laboratory and analytical data were introduced into the simulator, in order to be as representative as possible.

### Example 1: Dilution of biocrude with MEK diluent and recovery of diluent by distillation (comparative)

In this example, not in accordance with the invention, steps a) and b) and d) are similar to those of the invention, according to the embodiment of Figure 1. Only the diluent recovery step is different. Hence the same references are used to compare them with Examples 2 and 3 according to the invention.

The simulated process includes a step of diluting the biocrude feedstock with the diluent (8) to obtain a diluted biocrude feedstock (9).

The biocrude is represented as a mixture of hydrocarbons with a boiling point of between 100°C and more than 740°C and oxygen-containing compounds ("oxygenates"). The hydrocarbons are declared as petroleum fraction and the oxygen-containing compounds as pure compounds. The composition of the hydrocarbon stream is indicated by the boiling point curve as a function of the percentage distilled, commonly called a TBP curve (true boiling point curve). The composition of the oxygenate stream is indicated by data from the analysis by two-dimensional chromatography with flame ionization detector (GCXGC) of the 180°C cut obtained by distillation. Based on this composition, the simulator affords access to a TBP curve of the oxygenate stream. The TBP curve of the hydrocarbon stream is obtained by adjusting the data so that the sum of its TBP curve and the TBP curve of the oxygenate stream is as close as possible to the distillation curve of the native biocrude obtained by the simulated distillation method (SD) by gas chromatography applied to hydrocarbons (ASTM D7169). The TBP curve of the hydrocarbon stream is validated when the mean of the sum of the deviations between the calculated TBP curve and the SD curve of the biocrude is less than 1.5.

This representation makes it possible to integrate the oxygen-containing compounds into the description of the biocrude.

The kinematic viscosity (ASTM D445) of the biocrude is 22 cSt at 50°C, its density is 1.153 (NF EN ISO 12185). The inorganic content of the biocrude feedstock is 11291 ppm by mass. The inorganics were not introduced into the composition of the simulated biocrude. This is because the objective of these examples is to compare the energy consumption of different diluent recovery processes according to the nature of the diluent.

The diluent is 2-butanone (MEK) (CAS 78-93-3). Its kinematic viscosity is 0.4 centistokes (cSt) at 25°C. Its relative density is 0.8 (Proll thermodynamic library).

The flow rate of biocrude feedstock (1) is 1 kg/h. The flow rate of diluent (8) is 2 kg/h.

The simulated process comprises a step b) of washing the diluted biocrude feedstock (9) obtained in step a) with at least one solvent (3) by countercurrent liquid-liquid extraction in a washing column A, so as to obtain first a raffinate (5) comprising the biocrude feedstock depleted in inorganic compounds and diluent, and secondly a first extract (4) comprising the solvent enriched in inorganic compounds and diluent.

The washing column was simulated with a flow calculator by applying the mass flow rates of the outgoing flows. The following specifications were applied: 90% of the water introduced (3) is found in the extract, with a concentration of 15% by weight of diluent; all the citric acid remains in the extract, the biocrude is found at 100% in the raffinate. These performances correspond to a washing column with 5 theoretical stages.

The solvent used is water containing citric acid at 0.1 M.

The ratio of solvent to diluted biocrude feedstock (9) = (1)+(8) is 1.

The temperature is set at 40°C and the pressure at 3.9 barg.

The inorganic extraction rate, calculated as the ratio of the content of inorganics present in the extract (4) to the content of inorganics initially present in the biocrude feedstock (1), is 99%. This parameter reflects the efficiency of the washing. This value is applied in the simulator but is derived from laboratory tests.

The rate of loss of diluent in the extract (4) is 24%. This value is calculated on the basis of the solubility of the diluent in water.

The process also comprises a step c') (recovery of MEK diluent by distillation). The first extract (4) comprising the solvent enriched in inorganic compounds and diluent is sent to a distillation column D1 so as to obtain first the diluent and secondly an extract depleted in diluent and enriched in inorganic compounds.

The theoretical number of stages of the distillation column D1 is 10. The distillation column is equipped with a condenser/reboiler. The column top and bottom temperatures are 71 °C and 36°C, respectively.

The diluent recovery rate in the distillation step c'), calculated as the ratio of the amount of diluent recovered at the top of the distillation column to the amount of diluent initially introduced (8), reaches 24%. The energy consumption of the distillation column D1 is 79 kcal/h.

The process also comprises a fractionation step d). The raffinate (5) obtained in step b) is then fractionated by distillation in a distillation column D2 so as to obtain at least the biocrude feedstock depleted in inorganic compounds (7) and an effluent (6) comprising the diluent. The effluent (6) is completely recycled as diluent (8) to the dilution step a).

The theoretical number of stages of the distillation column D2 is 10. The distillation column is equipped with a condenser/reboiler. The column top and bottom temperatures are 71°C and 36°C, respectively.

At the distillation outlet, the biocrude has 80 ppm of inorganics. This value is derived from laboratory-obtained data.

The diluent recovery rate in the distillation step d), calculated as the ratio of the amount of diluent in the stream (6) (recovered after fractionation step d)) to the amount of diluent initially introduced (8), is 76%.

The diluent recovery rate in the overall process, including the amount of diluent recovered in the two distillation columns, is 100%.

The energy consumption of the distillation column D2 is 22 kcal/h.

This makes 79 kcal/h + 22 kcal/h = 101 kcal/h to recover all of the MEK diluent in this Example 1.

### Example 2: Dilution of biocrude with MEK diluent and recovery of diluent by backwashing (according to the invention)

The simulated method corresponds to that of Figure 1.

The process according to the invention comprises a step a) of diluting the biocrude feedstock with the diluent (8) so as to obtain a diluted biocrude feedstock (9).

The biocrude is represented as a mixture of hydrocarbons with a boiling point of between 100°C and more than 740°C and oxygen-containing compounds ("oxygenates"). The hydrocarbons are declared as petroleum fraction and the oxygen-containing compounds as pure compounds. The composition of the hydrocarbon stream is indicated by the boiling point curve as a function of the percentage distilled, commonly called a TBP curve (true boiling point curve). The composition of the oxygenate stream is indicated by data from the analysis by two-dimensional chromatography with flame ionization detector (GCXGC) of the 180°C cut obtained by distillation. Based on this composition, the simulator affords access to a TBP curve of the oxygenate stream. The TBP curve of the hydrocarbon stream is obtained by adjusting the data so that the sum of its TBP curve and the TBP curve of the oxygenate stream is as close as possible to the distillation curve of the native biocrude obtained by the simulated distillation method (SD) by gas chromatography applied to hydrocarbons (ASTM D7169). The I TBP curve of the hydrocarbon stream is validated when the mean of the sum of the deviations between the calculated TBP curve and the SD. curve of the biocrude is less than 1.5.

This representation makes it possible to integrate the oxygen-containing compounds into the description of the biocrude.

The kinematic viscosity (ASTM D445) of the biocrude is 22 cSt at 50°C, its density is 1.153 (NF EN ISO 12185). The inorganic content of the biocrude feedstock is 11291 ppm by mass. The inorganics were not introduced into the composition of the simulated biocrude.

The diluent is 2-butanone (MEK) (CAS 78-93-3). Its viscosity is 0.4 cSt at 25°C. Its relative density is 0.8 (Proll thermodynamic library).

The flow rate of biocrude feedstock (1) is 1 kg/h. The flow rate of diluent (8) is 2 kg/h.

The process comprises a step b) of washing the diluted biocrude feedstock (9) obtained in step a) with at least one solvent (3) by countercurrent liquid-liquid extraction in a washing column A, so as to obtain first a raffinate (5) comprising the biocrude feedstock depleted in inorganic compounds and diluent, and secondly an extract (4) comprising the solvent enriched in inorganic compounds and diluent.

The washing column was simulated with a flow calculator by applying the mass flow rates of the outgoing streams. The following specifications were applied: 90% of the water introduced (3) is found in the extract, with a concentration of 15% by weight of diluent; all the citric acid remains in the extract, the biocrude is found at 100% in the raffinate. These performances correspond to a washing column with 5 theoretical stages. The solvent used is water containing citric acid at 0.1 M.

The ratio of solvent to diluted biocrude feedstock (9) = (1)+(8) is 1.

The temperature is set at 40°C and the pressure at 3.9 barg.

The inorganic extraction rate, calculated as the ratio of the content of inorganics present in the extract (4) to the content of inorganics initially present in the biocrude feedstock (1), is 99%. This parameter reflects the efficiency of the washing.

The rate of loss of diluent in the extract (4) is 24%. This value is calculated on the basis of the solubility of the diluent in water.

The process comprises a step c) of backwashing the extract comprising the solvent enriched in inorganic compounds and the first extract (4) with a counter-solvent (14), by countercurrent liquid-liquid extraction in a column B so as to obtain first the diluent-enriched counter-solvent (11) and secondly an extract (12) depleted in diluent and enriched in inorganic compounds. The entirety of said diluent-enriched counter-solvent (11) is reintroduced into the washing step b).

The backwashing column was simulated with a flow calculator by applying the mass flow rates of the outgoing streams, leading to a backwashing column with 5 theoretical stages.

The ratio of the flow rate of the first extract (4) to the flow rate of counter-solvent (14) is equal to 2.3.

The counter-solvent (14) is a cut with an initial boiling point of 169°C and a final boiling point of 253°C. The counter-solvent is simulated in the same way as the biocrude but within the specified boiling point range. This range is representative of the light cut from an HTL.

The number of theoretical stages in the backwashing column B is 5.

The temperature is set at 40°C and the pressure at 3.9 barg.

The diluent extraction rate in the backwashing step, calculated as the ratio of the amount of diluent in the diluent-enriched counter-solvent (11) to the amount of diluent initially present in the extract (4) comprising the solvent enriched in inorganic compounds and diluent, is set at 99%. This parameter reflects the efficiency of the washing. This value is applied in the simulator but is derived from laboratory tests.

The process comprises a fractionation step d). The raffinate (5) obtained in step b) is then fractionated by distillation (distillation column D2) so as to obtain at least the biocrude feedstock depleted in inorganic compounds (7) and an effluent (6) comprising the diluent. The effluent (6) comprising the diluent is entirely recycled as diluent (8) to the dilution step (a).

The theoretical number of stages of the distillation column D2 is 10. The distillation column is equipped with a condenser/reboiler. The column top and bottom temperatures are 70°C and 36°C, respectively.

At the distillation outlet, the biocrude has 80 ppm by mass of inorganics.

The diluent recovery rate in the overall process, calculated as the ratio of the amount of diluent in the stream (6) (recovered after fractionation step d)) to the amount of diluent initially introduced (8), is 99.8%.

The energy consumption of the distillation column is 43 kcal/h.

This makes 43 kcal/h to recover the entire MEK diluent in this example because no significant energy consumption is considered for the backwashing step, which takes place at a temperature of 40°C.

### Example 3: Dilution of biocrude with MIBK diluent and recovery of diluent by backwashing (according to the invention)

The simulated method corresponds to that of Figure 1.

The process comprises a step a) of diluting the biocrude feedstock with the diluent (8) to obtain a diluted biocrude feedstock (9).

The biocrude is represented as a mixture of hydrocarbons with a boiling point of between 100°C and more than 740°C and oxygen-containing compounds ("oxygenates"). The hydrocarbons are declared as petroleum fraction and the oxygen-containing compounds as pure compounds. The composition of the hydrocarbon stream is indicated by the boiling point curve as a function of the percentage distilled, commonly called a TBP curve (true boiling point curve). The composition of the oxygenate stream is indicated by data from the analysis by two-dimensional chromatography with flame ionization detector (GCXGC) of the 180°C cut obtained by distillation. Based on this composition, the simulator affords access to a TBP curve of the oxygenate stream. The TBP curve of the hydrocarbon stream is obtained by adjusting the data so that the sum of its TBP curve and the TBP curve of the oxygenate stream is as close as possible to the distillation curve of the native biocrude obtained by the simulated distillation method (SD) by gas chromatography applied to hydrocarbons (ASTM D7169). The TBP curve of the hydrocarbon stream is validated when the mean of the sum of the deviations between the calculated TBP curve and the SD curve of the biocrude is less than 1.5.

This representation makes it possible to integrate the oxygen-containing compounds into the description of the biocrude.

The kinematic viscosity (ASTM D445) of the biocrude is 22 cSt at 50°C, its density is 1.153 (NF EN ISO 12185). The inorganic content of the biocrude feedstock is 11291 ppm by mass. The inorganics were not introduced into the composition of the simulated biocrude.

The diluent is 4-methylpentan-2-one (MIBK) (CAS 101-10-1). Its kinematic viscosity is 0.5 cSt at 25°C. Its relative density is 0.8 (Pro II thermodynamic library).

The flow rate of biocrude feedstock (1) is 1 kg/h. The flow rate of diluent (8) is 2 kg/h.

The process comprises a step b) of washing the diluted biocrude feedstock (9) obtained in step a) with at least one solvent (3), which comprises a liquid aqueous phase, by countercurrent liquid-liquid extraction in a washing column A, so as to obtain first a raffinate (5) comprising the biocrude feedstock depleted in inorganic compounds and diluent, and secondly an extract (4) comprising the solvent enriched in inorganic compounds and diluent.

The washing column was simulated with a flow calculator by applying the mass flow rates of the outgoing streams. The following specifications were applied: 98% of the water introduced is found in the extract, at a concentration of 2% by weight of diluent; all the citric acid remains in the extract, the biocrude is found at 100% in the raffinate. These performances correspond to a washing column with 2 theoretical stages, given the low polarity of the MIBK.

The solvent used is water containing citric acid at 0.1 M.

The ratio of solvent to diluted biocrude feedstock (9) = (1)+(8) is 1.

The temperature is set at 40°C and the pressure at 3.9 barg.

The inorganic extraction rate, calculated as the ratio of the content of inorganics present in the extract (4) to the content of inorganics initially present in the biocrude feedstock (1), is 99%. This parameter reflects the efficiency of the washing. This value is applied in the simulator but is derived from laboratory tests.

The rate of loss of diluent in the extract (4) is 3%. This value is calculated on the basis of the solubility of the diluent in water.

The process comprises a step c) of backwashing the extract comprising the solvent enriched in inorganic compounds and the first extract (4) with a counter-solvent (14), by countercurrent liquid-liquid extraction so as to obtain first the diluent-enriched counter-solvent (11) and secondly an extract (12) depleted in diluent and enriched in inorganic compounds. The entirety of said diluent-enriched counter-solvent (11) is reintroduced into the washing step b).

The backwashing column was simulated with a flow calculator by applying the mass flow rates of the outgoing streams.

The number of theoretical stages of the backwashing column B was set at 2. The temperature is set at 40°C and the pressure at 3.9 barg.

The ratio of the flow rate of the first extract (4) to the flow rate of counter-solvent (14) is equal to 11.

The counter-solvent (14) is a cut with an initial boiling point of 169°C and a final boiling point of 253°C. The counter-solvent is simulated in the same way as the biocrude but within the specified boiling point range. This range is representative of the light cut from an HTL.

The diluent extraction rate in the backwashing step, calculated as the ratio of the amount of diluent in the diluent-enriched counter-solvent (11) to the amount of diluent initially present in the extract (4) comprising the solvent enriched in inorganic compounds and diluent, is set at 92%. This parameter reflects the efficiency of the backwashing. This value is applied in the simulator but is derived from laboratory tests.

The process comprises a fractionation step d). The raffinate (5) obtained in step b) is then fractionated by distillation (distillation column D2) so as to obtain at least the biocrude feedstock depleted in inorganic compounds (7) and an effluent (6) comprising the diluent. The effluent (6) comprising the diluent is entirely recycled as diluent (8) to the dilution step (a).

The theoretical number of stages of the distillation column D2 is 10. The distillation column is equipped with a condenser/reboiler. The column top and bottom temperatures are 53°C and 167°C, respectively.

At the distillation outlet, the biocrude has 80 ppm by mass of inorganics.

The diluent recovery rate in the overall process, calculated as the ratio of the amount of diluent in the stream (6) (recovered after fractionation step d)) to the amount of diluent initially introduced (8), is 99.0%.

The energy consumption of the distillation column is 77 kcal/h.

This makes 77 kcal/h to recover the entire MIBK diluent in this example because no significant energy consumption is considered for the backwashing step, which takes place at a temperature of 40°C.

Table 1 compares the energy consumptions associated with diluent recovery for the 3 examples.

**[Table 1]**

| | Example 1 (comparative) MEK diluent Diluent recovery by distillation | Example 2 (according to the invention) MEK diluent Diluent recovery by backwashing | Example 3 (according to the invention) MIBK diluent Diluent recovery by backwashing |
|---|---|---|---|
| Flow rate of biocrude (1), kg/h | 1 | 1 | 1 |
| Flow rate of diluent (8), kg/h | 2 | 2 | 2 |
| Flow rate of solvent (3), kg/h | 3 | 3 | 3 |

| **Washing column A** | | | |
|---|---|---|---|
| Number of stages | 5 | 5 | 2 |
| Flow rate ratio (1)/(8) | 0.5 | 0.5 | 0.5 |
| Flow rate ratio (3)/(1) + (8) | 1 | 1 | 1 |
| Inorganic extraction rate, wt.% | 99 | 99 | 99 |
| Diluent loss rate in (4), wt.% | 24 | 24 | 3 |

| **Distillation column D2** | | | |
|---|---|---|---|
| Energy consumption, kcal/h | 22 | 43 | 77 |
| Diluent recovery rate, wt.% (6)/(8) | 76.0 | 99.8 | 99 |

| **Distillation column D1** | | | |
|---|---|---|---|
| Energy consumption, kcal/h | 79 | | |
| Diluent recovery rate, wt.% (top of column D1)/(8) | 24 | | |

| **Washing column B** | | | |
|---|---|---|---|
| Number of stages | | 5 | 2 |
| Flow rate ratio (4)/(14) | | 2 | 10 |
| Diluent extraction rate, wt.% (11)/(4) | | 99 | 92 |

For the MEK diluent, the comparison between case 1 and case 2 shows a significant energy gain by switching from case 1 to case 2, which reinforces the option of recovering the diluent in the extract by liquid/liquid extraction, which is less energy-intensive than a distillation.

Comparing case 2 and case 3, given its lower polarity, the amount of MIBK diluent lost in the extract is lower compared to MEK, thus requiring a smaller backwashing column B (2 theoretical stages) than that for MEK (5 theoretical stages). The increase in the energy consumption of column D2 is related to the boiling point, which is higher for MIBK (116°C) than for MEK (80C°). However, the recovery of MIBK via two distillation columns would be much more energy-intensive, given its higher boiling point. In addition, owing to its lower polarity, the concentration of MIBK in the extract is low. A recovery by distillation would be equivalent to distilling water and therefore very energy-intensive.

These examples clearly illustrate the economic interest of recovering the diluent by liquid/liquid extraction instead of distilling, especially since the diluent is apolar.

## Claims

1. Process for treating a liquid feedstock which comprises at least partly carbonaceous products and which is obtained from a hydrothermal liquefaction treatment "HTL", called biocrude feedstock (1), to reduce the content therein of inorganic compounds, especially metallic compounds, **characterized in that** said treatment comprises:
- a step a) of diluting the biocrude feedstock with a diluent (8) so as to obtain a diluted biocrude feedstock (9), said diluent (8) comprising an organic liquid phase with a viscosity and a density lower than that of the biocrude feedstock;
- a step b) of washing the diluted biocrude feedstock (9) obtained in step a) with at least one solvent (3) which comprises a liquid aqueous phase, by countercurrent liquid-liquid extraction, so as to obtain first a raffinate (5) comprising the biocrude feedstock depleted in inorganic compounds and diluent, and secondly a first extract (4) comprising the solvent enriched in inorganic compounds and diluent;
- a step c) of backwashing said first extract (4) comprising the solvent enriched in inorganic compounds and diluent with a counter-solvent (14), by countercurrent liquid-liquid extraction, so as to obtain first the diluent-enriched counter-solvent (11) and secondly a second extract (12) depleted in diluent and enriched in inorganic compounds, said counter-solvent (14) comprising at least one hydrocarbon cut whose initial boiling point is between 100°C and 230°C and whose final boiling point is between 230°C and 300°C;
- a step d) of fractionating by distillation of the raffinate (5) obtained in step b) to obtain at least the biocrude feedstock depleted in inorganic compounds (7) and an effluent (6) comprising the diluent, **characterized in that** at least part of the effluent (6) comprising the diluent is reintroduced into the feedstock dilution step a).

2. Process according to Claim 1, wherein said counter-solvent (14) used in the backwashing step c) is a light cut from said hydrothermal liquefaction treatment.

3. Process according to Claim 1, wherein said counter-solvent (14) used in the backwashing step c) is an intermediate cut (13) obtained at the end of the fractionation step d).

4. Process according to any one of Claims 1 to 3, wherein said counter-solvent (14) used in the backwashing step c) comprises at least one hydrocarbon cut whose initial boiling point is between 150°C and 210°C and whose final boiling point is between 230°C and 280°C.

5. Process according to any one of Claims 1 to 4, wherein said counter-solvent (14) used in the backwashing step c) has a solubility in water of less than 0.8% by weight, a dynamic viscosity at 40°C of not more than 6 cP, and a density at 15°C of not more than 950 kg/m³.

6. Process according to any one of Claims 1 to 5, wherein the washing step b) and the backwashing step c) are carried out in two separate liquid/liquid extraction columns.

7. Process according to any one of Claims 1 to 5, wherein the washing step b) and the backwashing step c) are carried out within the same liquid/liquid extraction column.

8. Process according to one of the preceding claims, **characterized in that** at least a portion of said diluent-enriched counter-solvent (11) is reintroduced into the washing step b).

9. Process according to one of the preceding claims, **characterized in that** a portion of said diluent-enriched counter-solvent (11) is mixed with the raffinate (5) and then sent to the fractionation step d).

10. Process according to one of the preceding claims, **characterized in that** the diluent (8) supplied in step a) has a final boiling point of not more than 150°C.

11. Process according to one of the preceding claims, **characterized in that** at the end of the dilution step a), the diluted biocrude feedstock (9) has a dynamic viscosity at 20°C of not more than 7 cP, and a density at 15°C of not more than 950 kg/m³.

12. Process according to one of the preceding claims, **characterized in that** the diluent (8) used in the dilution step a) is chosen from a light cut present in the biocrude feedstock or a chemical compound or mixture of chemical compounds, in particular from the class of alcohols, ethers, ketones and hydrocarbons.

13. Process according to one of the preceding claims, **characterized in that** the solvent (3) used in the washing step b) is chosen from at least one of the following solutions: a pure aqueous solution, a demineralized aqueous solution, an aqueous solution containing soluble organic compounds, and an acidic aqueous solution.

14. Process according to one of the preceding claims, **characterized in that**, during the dilution step a), the ratio R of the flow rate Qd of the diluent (8) to the flow rate Qb of the biocrude feedstock (1) is not more than 10.

15. Process according to one of the preceding claims, **characterized in that** the backwashing step c) is operated at a temperature of between 15°C and 100°C and below the boiling temperature of the diluent (8) at the washing pressure, and **in that** the washing pressure is between 0.5×10⁵ Pa and 5×10⁵ Pa.
